Europäisches Patentamt

European Patent Office

Office européen des brevets

(19)

(11) Publication number: **0 393 464**
**A2**

# EUROPEAN PATENT APPLICATION

(12)

(21) Application number: **90106779.3**

(51) Int. Cl.5: **G21B 1/00**

(22) Date of filing: **09.04.90**

(30) Priority: **20.04.89 JP 103097/89**

(43) Date of publication of application:
**24.10.90 Bulletin 90/43**

(84) Designated Contracting States:
**DE FR GB**

(71) Applicant: **SEL SEMICONDUCTOR ENERGY LABORATORY CO., LTD.**
**398 Hase**
**Atsugi-shi Kanagawa-ken 243(JP)**

(72) Inventor: **Yamazaki, Shunpei**
**21-21, Kitakarasuyama, 7-chome,**

Setagaya-ku
Tokyo 157(JP)
Inventor: **Miyanaga, Akiharu**
**Coop Denen 2-6, 1-5-5, Nagao, Tama-ku**
**Kawasaki-shi, Kanagawa-ken 243(JP)**
Inventor: **Takemura, Yasuhiko**
**Flat Atsugi 208 931-1, Hase,**
**Atsugi-shi, Kanagawa-ken 243(JP)**

(74) Representative: **Patentanwälte Grünecker,**
**Kinkeldey, Stockmair & Partner**
**Maximilianstrasse 58**
**D-8000 München 22(DE)**

(54) **Apparatus for plasma nuclear fusion.**

(57) An apparatus for attaining improved reliability in the implementation of a nuclear fusion reaction using a heat exchange system surrounding a plasma generating space in which the nuclear fusion reaction occurs.

EP 0 393 464 A2

FIG. 1

Xerox Copy Centre

## BACKGROUND OF THE INVENTION

### Field of the Invention

The present invention relates to attaining improved reliability in the implementation of a nuclear fusion reaction, and specifically to an apparatus of using microwaves in a magnetic field for the nuclear fusion reaction in the plasma chemical vapor reaction system.

### Description of the Prior Art

A nuclear fusion reaction by electrochemical process, which is referred to as cold nuclear fusion, has been attained and reported by S.E. Jones et al. The paper is entitled "Observation of Cold Nuclear Fusion in Condensed Matter" and was authored by S.E. Jones, E.P. Palmer, J.B. Crirr, D.L. Decler, G.L. Jensen, J.M. Thorne, S.F. Taylor, (all of Brigham Young University), and J. Rafelski (University of Arizona).

In this reaction, a pair of electrodes comprising a palladium or titanium cathode and a gold or platinum anode are inserted into a solution containing heavy water, and a DC voltage is applied across these electrodes. In addition, the electrochemical nuclear fusion reaction is carried out at an atmospheric pressure.

Because of the fact that this reaction is carried out in a solusion in a normal environment, there is little possibility that deuterium (D) atoms combine with other deuterium atoms to produce the nuclear fusion.

Nuclei of deuterium are created at a portion of the cathode and simultaneously the fusion reaction of deuterium nuclei are caused at the same portion.

Also, since a solusion is used, palladium which is used as a catalyst for combining the deuterium atoms is easily poisoned to be coated with a poisoned film of inactive substance, whereby the extent of catalyst reactivity is deteriorated, and it is difficult to break down the poisoned film to produce a uniform nuclear fusion. For this reason, there is a high degree of variation and a lack of reproducibility in the nuclear fusion reaction.

In addition, because of the occurrence of electrochemical side reactions which takes place simultaneously with the nuclear fusion, most of the products of the reaction decompose and the deuterium is eventually released into the atmosphere. As a result, the amount of deuterium actually used in the nuclear fusion reaction is considerably less than expected. Therefore, a method of reliably controlling the nuclear fusion reaction with a high probability of nuclear fusion occurring is further required.

## SUMMARY OF THE INVENTION

An object of the present invention is to provide, with due consideration to the drawbacks of such a prior art reaction system, an apparatus for attaining improved reliability in the implementation of a high density plasma nuclear fusion reaction.

Another object of the present invention is to provide an apparatus of attaining improved reliability in the implementation of a nuclear fusion reaction causing the nuclear fusion reaction with a high purity deuterium gas at an area different from the area where the deuterium gas is made into plasma.

All of the energy of neutrons etc. is absorbed by a neutron energy absorbing medium or heat transfer medium, for example water ($H_2O$), so that the radioactive elements such as neutrons do not leak to the outside, and substantially all of the energy is transformed into heat energy. By releasing this heat energy to the outside through the medium, the energy produced by the nuclear fusion reaction, especially the heat energy of the fusion reaction, becomes a simple energy source and can be used industrially.

## BRIEF DESCRIPTION OF THE DRAWINGS

Figure 1 is a schematic illustration showing one embodiment of the system for the plasma nuclear fusion reaction in the present invention.

Figure 2(A) is a graph showing a computer simulation of the characteristics of the magnetic field used in one embodiment of the present invention.

Figure 2(B) is a graph showing a computer simulation of the characteristics of the electric field used in one embodiment of the present invention.

Figure 3(A) is a graph showing the characteristics of the magnetic field under conditions of interaction of both the electric and magnetic fields used in one embodiment of the present invention.

Figure 3(B) is a graph showing the characteristics of the electric field under conditions of interaction of both the electric and magnetic fields used in one embodiment of the present invention.

Figure 4 is a graph showing the neutron count measured by the neutron counter placed at the position in the embodiment of Figure 1.

## DETALED DESCRIPTION OF THE PREFERRED EMBODIMENTS

In the nuclear fusion reaction in the present invention, a solution used in the prior art nuclear fusion process is not used, but 98% pure or better deuterium gas is used with the remaining being made up of hydrogen ($H_2$) and 100 PPM or less of other matter.

The probability of generating nuclear fusion is further improved by separately providing an area where the deuterium gas is made into plasma and an area where the deuterium atoms or ions which have been made into plasma are attracted to a reactive material for nuclear fusion reaction in an attempt to cause nuclear fusion reaction thereon.

By doing so, the probability of generating nuclear fusion is increased and energy produced by the nuclear fusion fusion reaction is more efficiently let to go out of the reaction system with less energy escaping.

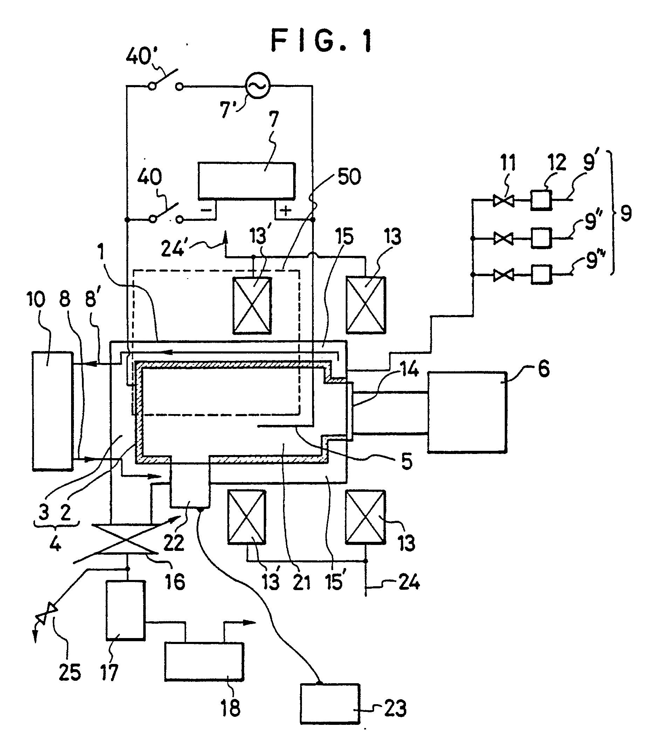

Figure 1 gives a description of the microwave and magnetic field equipment used in this invention to obtain plasma nuclear fusion.

According to the drawing, provided inside the nuclear fusion reaction vessel (1) is a reaction space or plasma generating space (21) capable of maintaining an atmospheric pressure or a reduced pressure where plasma is generated. The reaction vessel has an inner wall of a reactive material (2) for producing the nuclear fusion reaction of deuterium thereon surrounding the reaction space (21).

Located behind or on the outside of the reactive material (2) for producing the nuclear fusion reaction is a base (3) which contains a chamber (15) for a heat transfer medium which prevents the radioactive rays from going out to the outside and absorbs all of the energy of the radioactive rays.

The reactive material (2) and the base (3) form an electrode (4) which is illustrated by a shading-line portion in Figure 1.

The heat transfer medium moves from the heat transfer vessel (10) along a path (8) into the chamber (15) in the base (3) and the heated medium returns along another path (8′) from the chamber (15). The heat transfer medium is also effective to cool the reaction vessel (1) so as not to get too hot. When the base (3) containing the chamber (15) surrounds generally the reaction space or plasma generating space (21), all of the released neutrons can be absorbed by the heat transfer medium.

Donut-shaped Helmholtz type electromagnets (13) and (13′) for producing resonance surround the reaction vessel (1). In order that the electromagnets (13) and (13′) do not get too hot, there is a cooling means like a water chiller which water enters through a path (24) and exit through another path (24′).

Also there is an electrode (5), for example a needle type electrode, opposing the reactive material (2), a microwave power supply (6), a variable DC power supply (7), a gas system (9), a quartz window (14) through which the microwaves are supplied to the reaction space (21), a pressure regulator valve (16) on the exhaust line, a wide-area turbo molecule pump (17), a rotary pump (18) and a neuterium counter (22) with a control sysytem (23).

A valve (25) is provided for using atmospheric pressure in generating plasma. Specifically, when plasma is generated in the atmospheric pressure, the valve (25) is opened after the reaction has taken place, so that the gas is discharged into the atmosphere through the exhaust processor.

A bias voltage is applied from the power supply (7) between the electrode (4) and the electrode (5), so that there is a negative current or a negative pulse voltage being applied to the electrode (4).

The reactive gases flow through the gas system (9), specifically Helium (He) by line (9′), Deuterium ($D_2$) by line (9″) and Hydrogen ($H_2$) by line (9‴). They pass through the flow meter (12) and valve (11) and then enter the reaction space (21).

In operation, the neutrons produced in the nuclear fusion reaction are released into the base (3) that is arranged to have the chamber (15) behind the reactive material (2).

All of the neutron energy etc. is absorbed by a neutron energy absorbing medium or heat transfer medium in the chamber of the base (3), for example water ($H_2O$), so that the radioactive elements such as neutrons which may cause radioactive disaster do not leak to the outside, and the energy is transformed into heat energy. By releasing this heat energy to the outside through the medium from the reaction vessel (1), the energy produced by the nuclear fusion reaction, especially the heat energy of the fusion reaction, becomes a simple energy source and can be used industrially. For example, it can be used for producing electricity or heating.

Deuterium gas ($D_2$) is put into a plasma reaction vessel (1) where resonance of microwaves and magnetism is used to produce a high density plasma 10 - 1000 times more dense than that produced by using high frequency.

By applying electricity, the deuterium gas can then be made into plasma to obtain nuclear fusion. The deuterium ions in the plasma are attracted to the surface of the inner wall of the reaction vessel (1). The surface of the inner wall is made of the reactive material (2) (for example palladium or titanium) and made reactive for nuclear fusion by a negatively biased electric field provided from outside.

The deuterium nuclei (d) or the deuterium ions then collide with the surface of the cathode or the palladium electrode (2). The nuclear fusion reaction is obtained on and in the vicinity of this surface, for which the electric field is applied as a DC bias current from the external power supply (7) in such a way that the palladium side (2) becomes negatively biased.

The neutrons (n) are detected by the neutron counter (22) placed adjacent to the reaction vessel (1) for evidence of the cold nuclear fusion, specifically detecting the existence and amount of the neutrons produced there.

The neutrons (n) are detected by which the following nuclear fusion reaction can be expected as possible.

$d + d \rightarrow {}^3He(0.82\ MeV) + n(2.45\ MeV)$ At the same time the following reaction can also be expected.

$d + d \rightarrow P(3.02\ MeV) + t(1.01\ MeV)$

As a result of the nuclear fusion reaction, the neutrons collide the heat transfer medium (for example water) in the chamber (15) located behind the palladium electrode (2) carrying an energy e.g. of 2.45 MeV, thus producing a rise in temperature, by which an energy exchange as in the formula above is detected. The existence of the neutrons is detected using the neutron spectrometer (22) as mentioned above.

The production of neutrons and also the rise in temperature of the medium increases proportionally as the pressure in the reaction vessel (1) is increased from 0.1 torr to 7600 Torr and also as the applied electric energy is increased. Compared to the case of applying no external bias voltage, the nuclear fusion reaction on the palladium side is clearly promoted by increasing the voltage of the negatively biased current. In the present invention, the DC bias voltage can be increased from -100V to -1000V. Of course the voltage could have been increased more than this, but there is the danger of explosions; specifically, increasing the reaction efficiency too high will be followed by explosion.

It is important that when palladium is arranged in the reactive material (2) of the electrode (4) generally surrounding the plasma generating space (21), so that nuclear fusion is attempted there, the reaction is controlled so as not to advance too much. Therefore, although a voltage applied is sufficiently high enough for a reaction to take place, the nuclear fusion reaction is controlled so as not to exceed the critical value by applying the negative DC bias in intervals or pulses.

Specifically, the voltage is applied at 1 to 1000 pulses per minute and the pulse width is also varied from 0.1% to 100%. The 100% pulse width means a continuous state, which is referred to as DC continuous voltage. As a result, in the case where the DC continuous voltage is applied, the existence of nuclear fusion is observed even at as little as -200 V.

In the case where a DC pulsed voltage is applied, with a sufficiently high voltage, for example, -300 to -1000 V, and especially, for example, at -500V, and also with a duty ratio of 50% and a frequency of 30 times per minute, it is possible to suppress or control the extent of the nuclear fusion. Here, the term "duty ratio of 50%" means that voltage is applied for 50% of a single cycle with no voltage applied for the other 50% of the cycle.

The present invention will be more clearly understood by reading the following examples.

## EXAMPLE 1

According to Figure 1, the reaction space (21) in the nuclear fusion reaction vessel (1) was maintained at a predetermined pressure so that plasma was generated. The reaction vessel (1) was provided with an inner wall which was made of the reactive material (2) for producing the nuclear fusion reaction thereon. Provided behind the inner wall of the reactive material (2) was a base (3) which was provided with a chamber (15) thereon generally surrounding the reaction space (21).

A heat transfer medium was recirculated through the chamber (15) of the base (3) behind the reactive material (2), the path (8), the heat transfer vessel (10) and the path (8').

The material (2) was made with the base (3) to form the electrode (4) which was adapted to cooperate with the opposing electrode (5) for nuclear fusion.

The donut-shaped Helmholtz type electromagnets (13) and (13') surrounding the reaction vessel (1) produced resonance, so that the magnetic field was produced by the Helmholtz coil system using the two ringshaped electromagnets (13) and (13').

The electromagnets (13) and (13') and the reaction vessel (1) were prevented from getting too hot by the cooling means (24) and (24').

When plasma was generated in atmospheric pressure, the valve (25) was opened after the reaction had taken place, so that the gas was discharged into the atmosphere through the exhaust processor.

A bias voltage was applied from the power supply (7) between the reactive material (2) and the electrode (5), so that there was a negative current or a negative pulse voltage being applied to the reactive material (2).

The reactive gases flowed through the gas lines (9), specifically Helium (He) by line (9'), Deuterium ($D_2$) by line (9'') and Hydrogen ($H_2$) by line (g'''). They passed through the flow meter (12) and valve (11) and then entered the reaction space (21).

As a negative DC voltage applied to the surface of the reactive material or palladium electrode (2) in the electrode (4) generally surrounding the plasma space (21) was increased, the neutron count of the reaction was increased, from which it was expected that the deuterium atoms or ions that had been turned to plasma combined with each other on the reactive material (2) according to the following nuclear fusion reactions:

d + d --> $^3$He(0.82 MeV) + n(2.45 MeV)

d + d --> P(3.02 MeV) + t(1.01 MeV)

The neutron count was performed by the counter (22) by way of the control system (23). It should be mentioned that this count is a relative value.

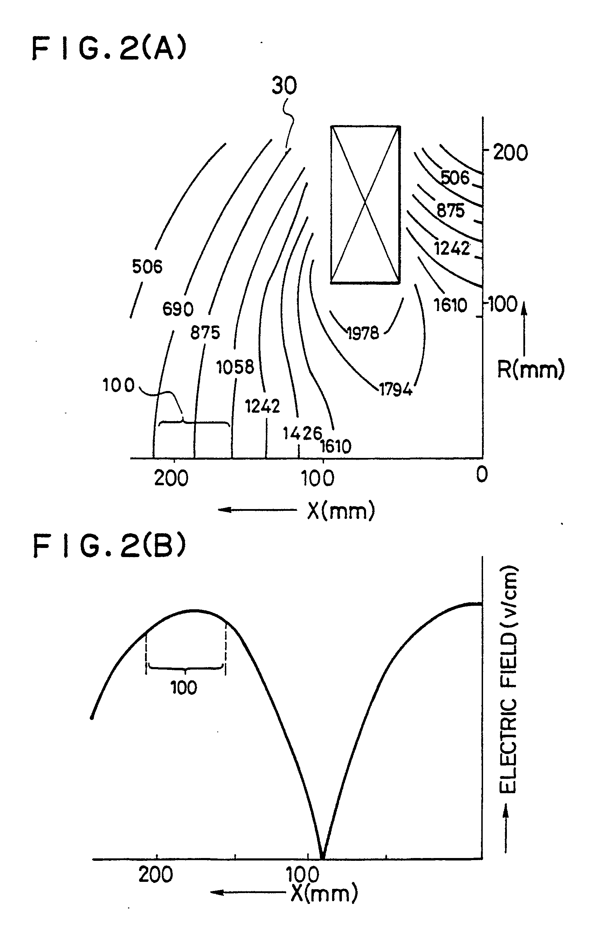

The relationship of the resonance between the plasma reaction and the magnetic field is shown in Figures 2(A) to 3(B).

The strength of the electric field and the magnetic field of a space (50) divided into four sections was investigated and the results are shown in Figure 2(A) and Figure 2(B).

In Figure 2(A), the abscissa (x-axis) is the horizontal direction (the direction of the flow of reaction gases) through the space (50). The ordinate axis (R axis) is the radial direction of the electromagnets. The curves of the graph show the uniform levels or contour lines of the magnetic field. The numbers on the curves give the strength of the magnetic field obtained when the electromagnet (13') is about 2000 gauss. When the strength of the electromagnet (13') is adjusted and the resonance space (100) is produced by the 2.45 MHz microwaves with the interaction of the electric and magnetic fields in the range of 875 ± 185 gauss, the curve (30) indicates the uniform magnetic field which produces this resonance condition at 875 gauss.

The resonance space (100) produced by this resonance condition, as shown in Figure 2(B), is located at an area where the maximum electric field of the microwaves occurs. The abscissa of Figure 2(B), as in Figure 2(A), indicates the direction of the gas flow through the space, while the ordinate axis (vertical axis) incicates the strength or intensity of the electric field.

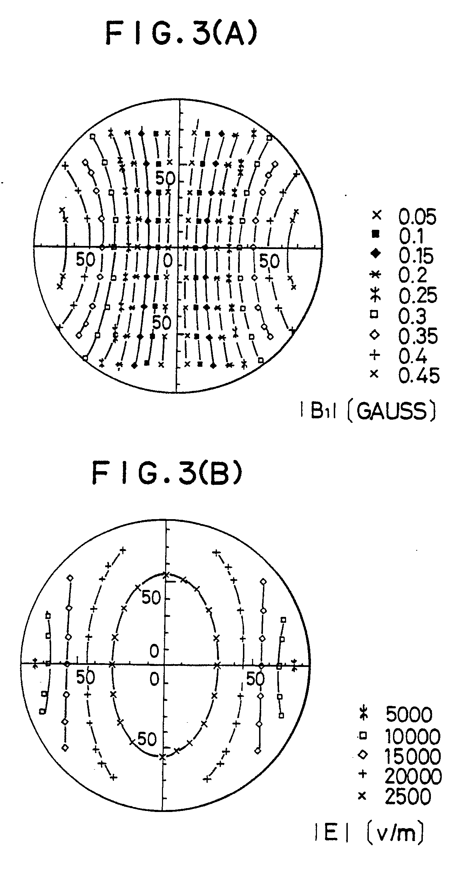

Figure 3(A) is a graph showing surfaces on each of which the strength of the magnetic field is constant and Figure 3(B) is a graph showing surfaces on each of which the strength of the electric field is constant in a circular region around the palladium electrode (2) of Figure 1.

It is clear from Figure 3(B) that the maximum electric field reached is 25kV/m, and that at this strength a high density of deuterium atoms or ions needed for nuclear fusion are collected on the surface or in the vicinity of the surface of the palladium or reaction material (2). This result means that $D^+$ ions are produced 100 to 10000 times larger than simply in a high frequency electric discharge of 500 kHz to 50 MHz.

EXAMPLE 2

In the equipment of Figure 1, the microwave was used with the frequency between 500 MHz and 50 GHz, for examle at a value of 2.45 GHz, and the electric power was applied between 500 to 50 kW, for example 2 kW. A flow of 20cc/min of deuterium in the form of high purity deuterium gas was made through gas line (9″). The exhaust line was adjusted so that the pressure in the space (21) was kept in the range from 0.1 to 7600 Torr, for example a pressure of 760 Torr, in order to produce plasma in the space (21).

It should be noted that this pressure is higher than the 0.001 to 0.01 Torr used by the ECR (electronic cyclotron resonance), and that as a result of this, the density of the deuterium ions is 10 to 10000 times higher.

It is expected that the impact of deuterium ions or atoms reduce and remove any filth from the palladium surface (2) to activate the palladium, and that the following nuclear fusion reaction is then obtainable;

d + d --> $^3$He(0.82 MeV) + n(2.45 MeV).

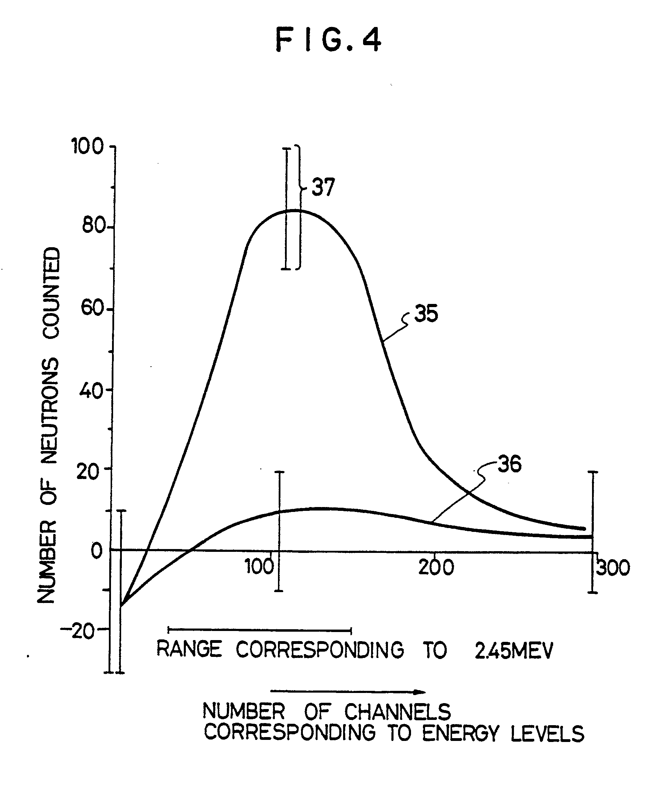

In Figure 4 the abscissa indicates the number of channels corresponding to the energy and the ordinate axis indicates the neutron count in the neutron counter.

It is concluded after making several measurements that although the variation of width (37) from top to bottom is found to be large, the neutron count in the region corresponding to the neutron energy is apparently increased and so makes it possible to confirm the existence of reaction as mentioned by the formula above.

In this example, the neutron counter (22) clearly confirmed the existence of neutrons. The existence of this nuclear fusion reaction was also confirmed by the facts that the temperature of the reaction rose and a temperature rise of the water inside the heat transfer vessel (10) was observed. The water temperature rose from room temperature to nearly 60 °C. When the plasma was maintained, the nuclear fusion reaction stably continued for nearly 1500 hours.

In trying to disprove that no nuclear fusion reaction occurs with another substance other than the deuterium, hydrogen ($H_2$) was added by way of line (9″) as shown in Figure 1, and the plasma reaction was attempted under the same conditions.

When this was done the neutron count was found to be the same as the background level. The curve (36) showing this neutron count is shown in Figure 4. The neutron count (36) obtained under these conditions is apparently different from the count (35) obtained when deuterium was used. This clearly confirms that nuclear fusion has occurred in this example.

In addition, the counter (22) was removed from the position as shown in Figure 1 and placed on the outside of the magnetic field (13) to check whether the radioactive rays of neutrons were absorbed by the heat transfer medium. The result in the counter (22) on the outside of the magnetic field (13) was substantially the same as the curve (36) of Figure 4. Accordingly, it was expected that almost of the radioactive rays of the neutrons was absorbed by the heat transfer medium.

EXAMPLE 3

In this example, a high frequency electric power was applied to the pair of electrodes (4) and (5) from a power source (7'), while the microwave power was applied in the same manner as in Example 2.

When the switch (40) of the variable DC power supply (7) in Figure 1 was turned on, a negatively biased direct current was added to a high frequency voltage which was applied to the electrodes (4) and (5). This bias voltage was progressively added from -50 V to -1000 V.

When this was done, the number of collisions of the deuterium ions with the palladium surface was increased due to the direct current bias. As a result, it was easier to produce more deuterium nuclei.

The bias voltage of Figure 1 was increased and controlled by the variable DC power supply (7). By doing so, the neutron count at location 100 of Figure 4 increased to the range of 400 to nearly 870 from the value of 100 in average which occurred when no bias was applied.

It should be noted that the result of the exterior negative bias is very remarkable.

All of the above examples were merely performed on the laboratory scale. However, by expanding this scale 10 - 1000 times, a nuclear fusion reaction with practical use can now be obtained and the nuclear fusion reaction can be used for some practical application such as a controllable energy source. Since the reaction space is surrounded by the heat transfer medium, the affects to human bodies of the neutrons which can otherwise be released to the outside is avoided. Therefore, the present invention should have a very large industrial impact.

The electric power to be supplied for reaction can be obtained from another sources such as the high frequency power supply or the DC power supply, but the microwave power supply is effective for producing high density plasma, thereby taking out a lot of energy from the nuclear fusion reaction.

**Claims**

1. An apparatus for producing plasma nuclear fusion reaction with interaction of both a magnetic field and an electric field, comprising;
a reaction vessel having an inner wall for defining a plasma generating space kept at a predetermined pressure from below atmospheric pressure to above the atmospheric pressure,
a reactive material for nuclear fusion reaction provided generally in the inner wall of the reaction vessel;
a heat exchange means provided for taking the energy of the nuclear fusion reaction out of the reaction vessel;
a magnetic field means for producing a magnetic field in the plasma generating space; and
a means for applying microwaves to the plasma generating space.

2. The apparatus of Claim 1, wherein a means is provided over the inner wall of the reaction vessel so as to apply a negative voltage to the reactive material for nuclear fusion reaction.

3. The apparatus of Claim 1, wherein the reactive material for nuclear fusion reaction is selected from the group of palladium and titanium.

4. The apparatus of Claim 1, wherein the heat exchange means generally surrounds the plasma generating space.

5. The apparatus of Claim 1, wherein the reactive material is connected with a member for defining a chamber therein, the reaction vessel is provided with a heat exchange device communicated with the chamber, and a heat transfer medium is recirculated between the chamber and the heat exchange device, whereby the heat exchange means comprises the chamber, the heat exchange device and the heat transfer medium.

# FIG. 1

F I G. 2(A)

F I G. 2(B)

# F I G. 3(A)

| | |
|---|---|
| × | 0.05 |
| ■ | 0.1 |
| ◆ | 0.15 |
| ✱ | 0.2 |
| ✶ | 0.25 |
| ▫ | 0.3 |
| ◇ | 0.35 |
| + | 0.4 |
| × | 0.45 |

$|B_1|$ (GAUSS)

# F I G. 3(B)

| | |
|---|---|
| ✱ | 5000 |
| ▫ | 10000 |
| ◇ | 15000 |
| + | 20000 |
| × | 2500 |

$|E|$ (v/m)

F I G . 4

RANGE CORRESPONDING TO 2.45MEV

NUMBER OF CHANNELS
CORRESPONDING TO ENERGY LEVELS

NUMBER OF NEUTRONS COUNTED